# EUROPÄISCHE PATENTSCHRIFT

(11) **EP 2 193 060 B1**
(45) Veröffentlichungstag und Bekanntmachung des Hinweises auf die Patenterteilung: **04.05.2011**
(21) Anmeldenummer: 08804233.8
(22) Anmeldetag: 16.09.2008
(51) Int. Cl.: B60W 10/06, B60W 10/08, B60W 20/00, B60W 10/02

(54) **VERFAHREN ZUM BETREIBEN EINES ANTRIEBSSTRANGS**
METHOD FOR THE OPERATION OF A DRIVE TRAIN
PROCÉDÉ DESTINÉ À FAIRE FONCTIONNER UNE CHAÎNE CINÉMATIQUE

(30) Priorität: 22.09.2007 DE 102007045365
(43) Veröffentlichungstag der Anmeldung: 09.06.2010
(73) Patentinhaber: ZF Friedrichshafen AG, 88038 Friedrichshafen (DE)
(72) Erfinder: BLATTNER, Stefan, 88267 Vogt (DE); KALTENBACH, Johannes, 88048 Friedrichshafen (DE); MITTELBERGER, Christian, 88212 Ravensburg (DE)
(86) Internationale Anmeldenummer: PCT/EP2008/062274
(87) Internationale Veröffentlichungsnummer: WO 2009/037239

(56) Entgegenhaltungen:
- EP-A- 0 922 600
- EP-A- 1 785 305
- WO-A-2007/045785
- DE-A1- 10 260 435

## Beschreibung

Die Erfindung betrifft ein Verfahren zum Betreiben eines zumindest ein Getriebe und einen Hybridantrieb umfassenden Antriebsstrangs eines Kraftfahrzeugs nach dem Oberbegriff des Anspruchs 1, und wie es aus dem Dokument EP 1 785 305 A2 bekannt ist.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb umfasst.

Aus der US 2005/0221947 A1 ist ein Verfahren zum Betreiben eines ein Automatgetriebe und einen Hybridantrieb umfassenden Antriebsstrangs eines Kraftfahrzeugs bekannt, wobei einerseits zwischen einem Verbrennungsmotor des Hybridantriebs und einem Elektromotor des Hybridantriebs eine Kupplung und andererseits zwischen dem Elektromotor des Hybridantriebs und dem Automatgetriebe eine weitere Kupplung angeordnet ist. Dann, wenn der Antriebsstrang ausschließlich vom Elektromotor des Hybridantriebs angetrieben wird, kann nach diesem Stand der Technik der Verbrennungsmotor des Hybridantriebs dadurch gestartet werden, dass während der Ausführung einer Hochschaltung durch das Automatgetriebe des Antriebsstrangs die zwischen dem Verbrennungsmotor des Hybridantriebs und dem Elektromotor desselben angeordnete Kupplung geschlossen wird. Nach der US 2005/0221947 A1 dient demnach der Elektromotor des Hybridantriebs dem Starten des Verbrennungsmotors des Hybridantriebs, wobei das Starten des Verbrennungsmotors während der Ausführung einer Hochschaltung und demnach bei einer Zugkraftunterbrechung erfolgt.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen.

Dieses Problem wird durch ein Verfahren zum Betreiben eines Antriebsstrangs gemäß Anspruch 1 gelöst.

Erfindungsgemäß wird dann, wenn der Elektromotor dauerhaft bzw. ohne Zugkraftunterbrechung an den Abtrieb gekoppelt ist und die Drehzahl des Elektromotors größer als eine Startdrehzahl des Verbrennungsmotors ist, zum Starten des Verbrennungsmotors die zwischen dem Verbrennungsmotor und dem Elektromotor angeordnete Kupplung derart gesteuert geschlossen und geöffnet, dass die Kupplung durch teilweises Schließen in Schlupf gebracht wird, um den Verbrennungsmotor zu starten, wobei anschließend dieselbe wieder vollständig geöffnet wird, und zwar vor Erreichen einer Synchrondrehzahl zwischen Verbrennungsmotor und Elektromotor.

Mit dem erfindungsgemäßen Verfahren ist es möglich, den Verbrennungsmotor des Hybridantriebs auch dann über den Elektromotor des Hybridantriebs zu starten, wenn der Elektromotor dauerhaft in den Abtrieb des Antriebstrangs eintreibt und demnach keine Unterbrechung der Zugkraft vorliegt, wobei dies bedingt durch das teilweise Schließen der zwischen dem Verbrennungsmotor und dem Elektromotor angeordneten Kupplung unter Gewährleistung eines hohen Komforts erfolgen kann. Es ist keinerlei Eingriff bzw. Aktion über das Getriebe des Antriebsstrangs erforderlich. Das Starten des Verbrennungsmotors erfolgt ohne Getriebeaktion durch eine definierte Ansteuerung der zwischen dem Verbrennungsmotor und dem Elektromotor des Hybridantriebs angeordneten Kupplung ohne Unterbrechung der Zugkraft. Unter Bereitstellung eines hohen Komforts kann der Verbrennungsmotor des Hybridantriebs innerhalb kurzer Zeit gestartet werden.

Nach einer ersten vorteilhaften Weiterbildung der Erfindung erfolgt das teilweise Schließen der zwischen dem Verbrennungsmotor und dem Elektromotor angeordneten Kupplung zeitgesteuert, derart, dass in einer ersten vorgegebenen Zeitspanne die Kupplung bis zu dem Punkt teilweise geschlossen wird, in welchem dieselbe das zum Überwinden des Losbrechmoment des Verbrennungsmotors erforderliche Moment überträgt, dass anschließend für eine zweite vorgegebene Zeitspanne die teilweise Schließstellung der Kupplung konstant gehalten wird, und dass hieran anschließend in einer dritten vorgegebenen Zeitspanne die Kupplung wieder vollständig geöffnet wird.

Nach einer zweiten vorteilhaften Weiterbildung der Erfindung erfolgt das teilweise Schließen der zwischen dem Verbrennungsmotor und dem Elektromotor angeordneten Kupplung drehzahlgesteuert, derart, dass die Kupplung bis zu dem Punkt teilweise geschlossen wird, in welchem eine erste vorgegebene Drehzahlschwelle des Verbrennungsmotors erreicht ist, dass anschließend die teilweise Schließstellung der Kupplung bis zum Erriechen einer zweiten vorgegebenen Drehzahlschwelle des Verbrennungsmotors konstant gehalten wird, und dass hieran anschließend die Kupplung wieder vollständig geöffnet wird

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erstes Antriebsstrangschema eines Kraftfahrzeugs, bei wel- chem das erfindungsgemäße Verfahren einsetzbar ist;
- Fig. 2: ein zweites Antriebsstrangschema eines Kraftfahrzeugs, bei welchem das erfindungsgemäße Verfahren einsetzbar ist;
- Fig. 3: ein drittes Antriebsstrangschema eines Kraftfahrzeugs, bei wel- chem das erfindungsgemäße Verfahren einsetzbar ist; und
- Fig. 4: ein Diagramm zur Verdeutlichung des erfindungsgemäßen Ver- fahrens zum Betreiben eines Antriebsstrangs eines Kraftfahr- zeugs.

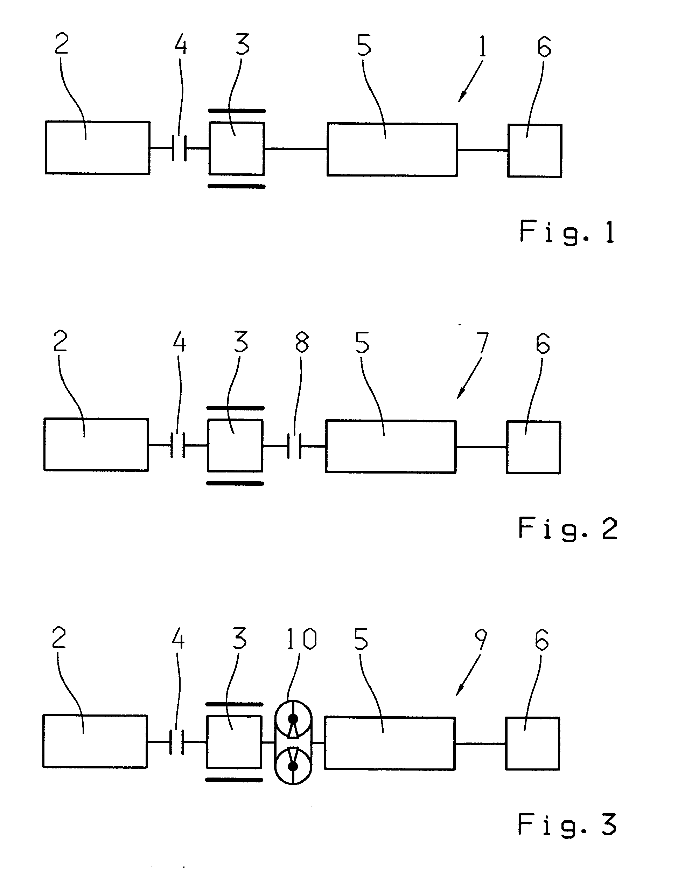

Die hier vorliegende Erfindung betrifft ein Verfahren zum Betreiben eines zumindest ein Getriebe und einen Hybridantrieb umfassenden Antriebsstrangs eines Kraftfahrzeugs. Ein Hybridantrieb umfasst einen Verbrennungsmotor und einen Elektromotor. Fig. 1 bis 3 zeigen exemplarisch Antriebsstrangschemata eines Kraftfahrzeugs, bei welchen das erfindungsgemäße Verfahren einsetzbar ist.

So zeigt Fig. 1 ein Schema eines Antriebsstrangs 1 eines Kraftfahrzeugs, wobei der Antriebsstrang 1 gemäß Fig. 1 einen Hybridantrieb umfasst, der von einem Verbrennungsmotor 2 und einem Elektromotor 3 gebildet ist. Zwischen den Verbrennungsmotor 2 und den Elektromotor 3 ist eine Kupplung 4 geschaltet, die dann, wenn der Antriebsstrang 1 ausschließlich vom Elektromotor 3 betrieben wird, geöffnet ist. Neben dem Hybridantrieb umfasst der Antriebsstrang 1 gemäß Fig. 1 weiterhin ein Getriebe 5, welches das vom Hybridantrieb bereitgestellte Zugkraftangebot auf einen Abtrieb 6, nämlich anzutreibende Räder, des Antriebsstrangs umsetzt. Im Antriebsstrang 7 der Fig. 2 ist zwischen den Elektromotor 3 des Hybridantriebs und das Getriebe 5 eine Kupplung 8 geschaltet. Ein weiteres Schema eines Antriebsstrangs 9 eines Kraftfahrzeugs zeigt Fig. 3, wobei sich der Antriebsstrang gemäß Fig. 3 vom Antriebsstrang der Fig. 2 dadurch unterscheidet, dass zwischen den Elektromotor 3 des Hybridantriebs und das Getriebe 5 keine Kupplung sondern vielmehr eine Wandlereinrichtung 10 geschaltet ist.

Wird ein Antriebsstrang gemäß Fig. 1, 2 oder 3 bei geöffneter Kupplung 4 ausschließlich vom Elektromotor 3 des Hybridantriebs angetrieben, so kann es unter bestimmten Betriebsbedingungen erforderlich sein, den Verbrennungsmotor 2 des Hybridantriebs zu starten.

Die hier vorliegende Erfindung betrifft ein Verfahren zum Betreiben eines solchen Antriebsstrangs, bei welchem dann, wenn ausschließlich der Elektromotor 3 in den Abtrieb 6 des entsprechenden Antriebsstrangs eintreibt und der Verbrennungsmotor 2 des jeweiligen Antriebsstrangs steht sowie die zwischen dem Verbrennungsmotor 2 und dem Elektromotor 3 positionierte Kupplung 4 geöffnet ist, den Verbrennungsmotor 2 zu starten, und zwar ohne die Kopplung des Elektromotors 3 mit dem Abtrieb 6 und damit die Zugkraft zu unterbrechen.

Erfindungsgemäß wird dann, wenn der Elektromotor 3 dauerhaft bzw. ohne Zugkraftunterbrechung an den Abtrieb 6 des jeweiligen Antriebsstrangs gekoppelt ist und die Drehzahl des Elektromotors 3 größer als eine Startdrehzahl des Verbrennungsmotors 2 ist, zum Starten des Verbrennungsmotors 2 die zwischen dem Verbrennungsmotor 2 und dem Elektromotor 3 angeordnete Kupplung 4 gesteuert geschlossen und geöffnet, nämlich derart, dass die Kupplung 4 durch teilweise Schließen in Schlupf gebracht wird, um den Verbrennungsmotor zu starten, und das anschließend die Kupplung 4 wieder vollständig geöffnet wird, und zwar vor Erreichen einer Synchrondrehzahl zwischen Verbrennungsmotor 2 und Elektromotor 3. Während des gesamten Startvorgangs für den Verbrennungsmotor 2 treibt demnach der Elektromotor 3 dauerhaft in den Abtrieb 6 des jeweiligen Antriebsstrangs ein. Es erfolgt keine Zugkraftunterbrechung.

Das gesteuerte Schließen und Öffnen der zwischen dem Verbrennungsmotor 2 und dem Elektromotor 3 geschalteten Kupplung 4 erfolgt derart, dass die Kupplung 4 zuerst bis zu einem Punkt teilweise geschlossen und demnach in Schlupf gebracht wird, in welchem das von der Kupplung 4 übertragene Moment ein Losbrechmoment des Verbrennungsmotors 2 überwindet, wobei anschließend die teilweise Schließstellung der Kupplung und damit das von derselben übertragene Moment konstant gehalten wird, und wobei anschließend hieran die Kupplung wieder vollständig geöffnet wird.

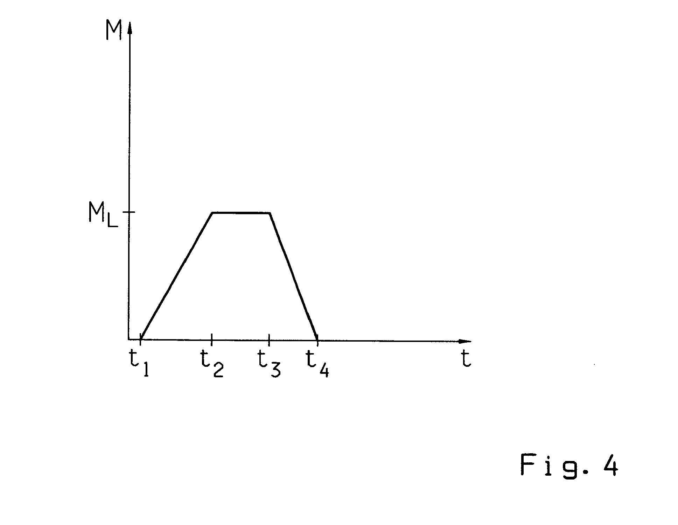

Dies kann Fig. 4 entnommen werden, wobei in Fig. 4 über der Zeit t das von der Kupplung 4 übertragene Moment M dargestellt ist. Zum Zeitpunkt t₁ wird mit dem Starten des Verbrennungsmotors 2 begonnen, indem die Kupplung 4 ausgehend von einer vollständig geöffneten Position, in welcher dieselbe kein Moment M überträgt, teilweise geschlossen wird, wobei zum Zeitpunkt t₂ die Kupplung 4 soweit teilweise geschlossen ist, dass dieselbe ein Moment M_{L} überträgt, mit welchem das Losbrechmoment des Verbrennungsmotors überwunden werden kann. Anschließend wird bis zum Zeitpunkt t₃ die Schließstellung der Kupplung und damit das von derselben übertragene Moment konstant gehalten, wobei darauffolgend bis zum Zeitpunkt t₄ die Kupplung wieder vollständig geöffnet wird, und zwar derart, dass zum Zeitpunkt t₄ die Synchrondrehzahl zwischen dem Verbrennungsmotor 2 und dem Elektromotor 3 noch nicht erreicht wurde.

Das obige, definierte Schließen und Öffnen der Kupplung kann nach einer ersten vorteilhaften Weiterbildung der Erfindung zeitgesteuert erfolgen, wobei dann die Zeitspannen zwischen den Zeitpunkten t₁ und t₂, t₂ und t₃ sowie t₃ und t₄ sowie die Schließstellung der Kupplung 4, in welcher dieselbe das Moment M_{L} überträgt, vorgegeben sind. Dabei können diese Parameter zur Ausführung des erfindungsgemäßen Verfahrens adaptiv erlernt werden, wobei diese Parameter weiterhin vorzugsweise von einer Temperatur des Verbrennungsmotors 2 abhängig sind.

Nach einer zweiten vorteilhaften Weiterbildung des erfindungsgemäßen Verfahrens erfolgt das definierte, gesteuerte Schließen und Öfnen der zwischen dem Verbrennungsmotor 2 und dem Elektromotor 3 angeordneten Kupplung 4 drehzahlgesteuert, wobei hierzu die Kupplung 4 bis zu einem Punkt teilweise geschlossen wird, in welchem eine erste vorgegebene Drehzahlschwelle des Verbrennungsmotors 2 erreicht ist, bei welcher das Losbrechmoment des Verbrennungsmotors 2 überwunden ist.

Anschließend an das Erreichen der ersten vorgegebenen Drehzahlschwelle wird die erzielte teilweise Schließstellung der Kupplung bis zum Erreichen einer zweiten vorgegebenen Drehzahlschwelle des Verbrennungsmotors 2 konstant gehalten, wobei bei Erreichen der zweiten vorgegebenen Drehzahlschwelle der Verbrennungsmotor 2 eigenständig startet bzw. hoch läuft.

Anschließend wird die Kupplung 4 wiederum vollständig geöffnet, und zwar derart, dass vor Erreichen der Synchrondrehzahl zwischen Verbrennungsmotor 2 und Elektromotor 3 die Kupplung 4 vollständig geöffnet ist. Nach dieser Variante sind demnach die Zeitpunkte t₁ bis t₄ des Diagramms der Figur 4 nicht fest vorgegeben, sondern vielmehr abhängig von den Drehzahlschwellen des Verbrennungsmotors 2.

Während des gesteuerten, teilweise Schließens und nachfolgenden Öffnens der zwischen dem Verbrennungsmotor 2 und dem Elektromotor 3 angeordneten Kupplung 4 kann das vom Elektromotor 3 bereitgestellte Antriebsmoment, welches in den Abtrieb dauerhaft eingetrieben wird, konstant gehalten werden. Zur Erhöhung des Komforts ist es jedoch möglich, dass alternativ das vom Elektromotor 3 bestellte Antriebsmoment während des teilweise Schließens und anschließenden Öffnens der Kupplung 4 verändert wird, um das von der Kupplung 4 an den Verbrennungsmotor 2 übertragene Moment zu kompensieren und so ein in etwa konstantes Antriebsmoment am Abtrieb 6 zu gewährleisten.

Mit dem erfindungsgemäßen Verfahren kann ein Verbrennungsmotor 2 eines Hybridantriebs mit Hilfe des Elektromotors 3 desselben innerhalb kurzer Zeit unter Gewährleistung eines hohen Komforts gestartet werden, und zwar dann, wenn der Elektromotor 3 zugkrafterhaltend dauerhaft in den Abtrieb 6 eintreibt.

Zu Beginn des erfindungsgemäßen Verfahrens steht der Verbrennungsmotor 2 still, die Kupplung 4 ist geöffnet und der Elektromotor 3 treibt in den Antriebsstrang bzw. den Abtrieb 6 desselben ein. Zum Ende des erfindungsgemäßen Verfahrens läuft der Verbrennungsmotor 2 bei geöffneter Kupplung 4 und der Elektromotor 3 treibt dauerhaft in den Abtrieb 6 des jeweiligen Antriebsstrangs ein.

### Bezugszeichen

- 1: Antriebsstrang
- 2: Verbrennungsmotor
- 3: Elektromotor
- 4: Kupplung
- 5: Getriebe
- 6: Abtrieb
- 7: Antriebsstrang
- 8: Kupplung
- 9: Antriebsstrang
- 10: Wandlereinrichtung

## Patentansprüche

1. Verfahren zum Betreiben eines Antriebsstrangs eines Kraftfahrzeugs, wobei der Antriebsstrang einen Hybridantrieb mit einem Verbrennungsmotor und einem Elektromotor, ein zwischen dem Hybridantrieb und einem Abtrieb angeordnetes Getriebe und eine zwischen dem Verbrennungsmotor und dem Elektromotor angeordnete Kupplung umfasst, wobei dann, wenn ausschließlich der Elektromotor antreibt, der Verbrennungsmotor dadurch gestartet wird, dass die zwischen dem Verbrennungsmotor und dem Elektromotor angeordnete Kupplung geschlossen wird, wobei, wenn der Elektromotor dauerhaft bzw. ohne Zugkraftunterbrechung an den Abtrieb gekoppelt ist und die Drehzahl des Elektromotors größer als eine Startdrehzahl des Verbrennungsmotors ist, zum Starten des Verbrennungsmotors die zwischen dem Verbrennungsmotor und dem Elektromotor angeordnete Kupplung derart gesteuert geschlossen und geöffnet wird, dass die Kupplung durch teilweises Schließen in Schlupf gebracht wird, um den Verbrennungsmotor zu starten, und **dadurch gekennzeichnet, dass** anschließend dieselbe wieder vollständig geöffnet wird, und zwar vor Erreichen einer Synchrondrehzahl zwischen Verbrennungsmotor und Elektromotor.

2. Verfahren nach Anspruch 1, **dadurch gekennzeichnet, dass** die zwischen dem Verbrennungsmotor und dem Elektromotor angeordnete Kupplung zuerst bis zu einem Punkt teilweise geschlossen wird, in welchem das von derselben übertragene Moment ein Losbrechmoment des Verbrennungsmotors überwindet, dass anschließend die teilweise Schließstellung der Kupplung konstant gehalten wird, und dass hieran anschließend die Kupplung wieder vollständig geöffnet wird.

3. Verfahren nach Anspruch 1 oder 2, **dadurch gekennzeichnet, dass** das teilweise Schließen der zwischen dem Verbrennungsmotor und dem Elektromotor angeordneten Kupplung zeitgesteuert erfolgt.

4. Verfahren nach Anspruch 3, **dadurch gekennzeichnet, dass** hierzu in einer ersten vorgegebenen Zeitspanne die Kupplung bis zu dem Punkt teilweise geschlossen wird, in welchem dieselbe das zum Überwinden des Losbrechmoment erforderliche Moment überträgt, dass anschließend für eine zweite vorgegebene Zeitspanne die teilweise Schließstellung der Kupplung konstant gehalten wird, und dass hieran anschließend in einer dritten vorgegebenen Zeitspanne die Kupplung wieder vollständig geöffnet wird.

5. Verfahren nach Anspruch 3 oder 4, **dadurch gekennzeichnet, dass** die Zeitspannen und der Punkt der teilweisen Schließstellung adaptiv erlernt werden.

6. Verfahren nach Anspruch 1 oder 2, **dadurch gekennzeichnet, dass** das teilweise Schließen der zwischen dem Verbrennungsmotor und dem Elektromotor angeordneten Kupplung drehzahlgesteuert erfolgt.

7. Verfahren nach Anspruch 6, **dadurch gekennzeichnet, dass** hierzu die Kupplung bis zu dem Punkt teilweise geschlossen wird, in welchem eine erste vorgegebene Drehzahlschwelle des Verbrennungsmotors erreicht ist, dass anschließend die teilweise Schließstellung der Kupplung bis zum Erriechen einer zweiten vorgegebenen Drehzahlschwelle des Verbrennungsmotors konstant gehalten wird, und dass hieran anschließend die Kupplung wieder vollständig geöffnet wird.

8. Verfahren nach einem Anspruch 7, **dadurch gekennzeichnet, dass** die erste Drehzahlschwelle und die zweite Drehzahlschwelle kleiner ist als die Synchrondrehzahl zwischen Verbrennungsmotor und Elektromotor, wobei bei Erreichen der ersten Drehzahlschwelle das Losbrechmoment des Verbrennungsmotors überwunden ist und bei Erreichen der zweiten Drehzahlschwelle der Verbrennungsmotor eigenständig startet.

9. Verfahren nach einem oder mehreren der Ansprüche 1 bis 8, **dadurch gekennzeichnet, dass** während des gesteuerten, teilweise Schließens und Öffnens der zwischen dem Verbrennungsmotor und dem Elektromotor angeordneten Kupplung das vom Elektromotor am Abtrieb bereitgestellte Antriebmoment konstant gehalten wird.

10. Verfahren nach einem oder mehreren der Ansprüche 1 bis 8, **dadurch gekennzeichnet, dass** während des gesteuerten, teilweise Schließens und Öffnens der zwischen dem Verbrennungsmotor und dem Elektromotor angeordneten Kupplung das vom Elektromotor am Abtrieb bereitgestellte Antriebmoment verändert wird, um das von der Kupplung an den Verbrennungsmotor übertragene Moment zu kompensieren und so ein in etwa konstantes Moment am Abtrieb zu gewährleisten.

## Claims

1. Method for operating a drive train of a motor vehicle, wherein the drive train comprises a hybrid drive with an internal combustion engine and electric motor, a transmission which is arranged between the hybrid drive and a power take off and a clutch which is arranged between the internal combustion engine and the electric motor, wherein if drive is provided exclusively by the electric motor, the internal combustion engine is started by closing the clutch arranged between the internal combustion engine and the electric motor, wherein if the electric motor is coupled to the power take off permanently or without an interruption in the tractive force and the rotational speed of the electric motor is higher than a starting rotational speed of the internal combustion engine, for the purpose of starting the internal combustion engine the clutch arranged between the internal combustion engine and the electric motor is closed and opened in a controlled fashion such that the clutch is made to slip through partial closure in order to start the internal combustion engine, **characterized in that** said clutch is then completely opened again before a synchronous rotational speed between the internal combustion engine and the electric motor is reached.

2. Method according to Claim 1, **characterized in that** the clutch arranged between the internal combustion engine and the electric motor is firstly partially closed up to a point at which the torque transmitted thereby overcomes a breakaway torque of the internal combustion engine, **in that** subsequently the partially closed position of the clutch is kept constant, and **in that** subsequent to this the clutch is opened again completely.

3. Method according to Claim 1 or 2, **characterized in that** the partial closing of the clutch arranged between the internal combustion engine and the electric motor is carried out with time control.

4. Method according to Claim 3, **characterized in that** for this purpose the clutch is closed partially in a first predefined time period up to the point at which said clutch transmits the torque necessary to overcome the breakaway torque, **in that** subsequently the partially closed position of the clutch is kept constant for a second predefined time period, and **in that** subsequent to this in a third predefined time period the clutch is completely opened again.

5. Method according to Claim 3 or 4, **characterized in that** the time periods and the point of the partially closed position are learnt adaptively.

6. Method according to Claim 1 or 2, **characterized in that** the partial closure of the clutch arranged between the internal combustion engine and the electric motor is carried out with controlled rotational speed.

7. Method according to Claim 6, **characterized in that** for this purpose the clutch is partially closed up to the point at which a first predefined rotational speed threshold of the internal combustion engine is reached, **in that** subsequently the partially closed position of the clutch is kept constant up to the point when a second predefined rotational speed threshold of the internal combustion engine is reached, and **in that** subsequent to this the clutch is opened again completely.

8. Method according to Claim 7, **characterized in that** the first rotational speed threshold and the second rotational speed threshold are lower than the synchronous rotational speed between the internal combustion engine and the electric motor, wherein, when the first rotational speed threshold is reached, the breakaway torque of the internal combustion engine is overcome, and when the second rotational speed threshold is reached the internal combustion engine starts independently.

9. Method according to one or more of Claims 1 to 8, **characterized in that** during the controlled, partial closing and opening of the clutch arranged between the internal combustion engine and the electric motor, the drive torque which is made available by the electric motor at the power takeoff is kept constant.

10. Method according to one or more of Claims 1 to 8, **characterized in that** during the controlled, partial closing and opening of the clutch arranged between the internal combustion engine and the electric motor, the drive torque which is made available by the electric motor at the power takeoff is changed in order to compensate the torque transmitted to the internal combustion engine by the clutch and therefore to ensure an approximately constant torque at the power takeoff.

## Revendications

1. Procédé de conduite d'un train d'entraînement d'un véhicule automobile, le train d'entraînement comprenant un entraînement hybride doté d'un moteur à combustion interne et d'un moteur électrique, une transmission située entre l'entraînement hybride et une sortie d'entraînement et un embrayage disposé entre le moteur à combustion interne et le moteur électrique, et dans lequel
lorsque seul le moteur électrique assure l'entraînement, le moteur à combustion interne est démarré en fermant l'embrayage disposé entre le moteur à combustion interne et le moteur électrique,
et lorsque le moteur électrique est accouplé durablement ou sans interruption de la force de traction à la sortie d'entraînement et que la vitesse de rotation du moteur électrique est supérieure à la vitesse de rotation de démarrage du moteur à combustion interne, pour démarrer le moteur à combustion interne, l'embrayage disposé entre le moteur à combustion interne et le moteur électrique est fermé et ouvert de manière contrôlée de telle sorte que l'embrayage soit amené à patiner par fermeture partielle pour démarrer le moteur interne,
**caractérisé en ce que**
cet entraînement est ensuite de nouveau complètement ouvert avant qu'une vitesse de rotation synchronisée soit atteinte entre le moteur à combustion interne et le moteur électrique.

2. Procédé selon la revendication 1, **caractérisé en ce que** l'embrayage disposé entre le moteur à combustion interne et le moteur électrique est d'abord fermé partiellement jusqu'à un point auquel le couple transmis par cet embrayage surmonte un couple de décollage du moteur à combustion interne et **en ce qu'**ensuite, la position partiellement fermée de l'embrayage est maintenue constante, l'embrayage étant ensuite de nouveau ouvert complètement.

3. Procédé selon la revendication 1 ou 2, **caractérisé en ce que** la fermeture partielle de l'embrayage disposé entre le moteur à combustion interne et le moteur électrique s'effectue de manière contrôlée dans le temps.

4. Procédé selon la revendication 3, **caractérisé en ce que** dans ce but, dans un premier intervalle de temps prédéterminé, l'embrayage est fermé partiellement jusqu'au point auquel cet embrayage transmet le couple nécessaire pour surmonter le couple de décollage, **en ce qu'**ensuite, pendant un deuxième intervalle de temps prédéterminé, la position partiellement fermée de l'embrayage est maintenue constante et ce qu'ensuite, dans un troisième intervalle de temps prédéterminé, l'embrayage est de nouveau complètement ouvert.

5. Procédé selon la revendication 3 ou 4, **caractérisé en ce que** les intervalles de temps et le point de fermeture partiel font l'objet d'un apprentissage adaptatif.

6. Procédé selon la revendication 1 ou 2, **caractérisé en ce que** la fermeture partielle de l'embrayage disposé entre le moteur à combustion interne et le moteur électrique s'effectue en étant contrôlée par les vitesses de rotation.

7. Procédé selon la revendication 6, **caractérisé en ce que** dans ce but, l'embrayage est fermé jusqu'au point auquel un premier seuil prédéterminé de vitesse de rotation du moteur à combustion interne soit atteint, **en ce qu'**ensuite, la position de fermeture partielle de l'embrayage est maintenue constante jusqu'à atteindre un deuxième seuil prédéterminé de vitesse de rotation du moteur à combustion interne et **en ce qu'**ensuite, l'embrayage est de nouveau complètement ouvert.

8. Procédé selon la revendication 7, **caractérisé en ce que** le premier seuil de vitesse de rotation et le deuxième seuil de vitesse de rotation sont plus bas que la vitesse de rotation de synchronisation entre le moteur à combustion interne et le moteur électrique, **en ce que** lorsque le premier seuil de vitesse de rotation est atteint, le couple de décollage du moteur à combustion interne est surmonté et **en ce que** lorsque le deuxième seuil de vitesse de rotation est atteint, le moteur à combustion interne démarre de manière autonome.

9. Procédé selon l'une ou plusieurs des revendications 1 à 8, **caractérisé en ce que** pendant la fermeture et l'ouverture partielles contrôlées de l'embrayage disposé entre le moteur à combustion interne et le moteur électrique, le couple d'entraînement délivré sur la sortie d'entraînement par le moteur électrique est maintenu constant.

10. Procédé selon l'une ou plusieurs des revendications 1 à 8, **caractérisé en ce que** le couple d'entraînement délivré sur la sortie d'entraînement par le moteur électrique est modifié pour compenser le couple transmis par l'embrayage au moteur à combustion interne et garantir ainsi un couple sensiblement constant sur la sortie d'entraînement.
